# EUROPEAN PATENT APPLICATION

(11) **EP 3 422 265 A1**
(43) Date of publication of application: **02.01.2019**
(21) Application number: 18382469.7
(22) Date of filing: 25.06.2018
(51) Int. Cl.: G06Q 10/04, G06Q 10/10, G06Q 50/30, G01C 21/36

(54) **METHOD FOR GENERATING AT LEAST ONE NOTIFICATION TO A USER IN A SHARED VEHICLE**

(30) Priority: 30.06.2017 ES 201730872
(71) Applicant: Seat, S.A., 08760 Martorell - Barcelona (ES)
(72) Inventor: VIDAL GRIÑÓ, GERARD, 08760 Barcelona (ES)
(74) Representative: Elzaburu S.L.P.

(57) **Abstract**

Method for generating at least one notification (3) to a user (6) in a shared vehicle (1), comprising receiving a trip request, wherein the trip request is required by a user (6), and wherein the trip request comprises an origin (4) and a destination (5), calculating a path of the vehicle based on the trip request, reserving a space (13) in the vehicle (1) for the user, determining the space (13) occupied by the user in the vehicle, and generating the at least one notification (3) for the user (6) based on the path of the vehicle and the space (13) occupied by the user (6) in the vehicle, so that a system issues a notification (3) or alarm to the user (6) of a means of transport, when they are reaching their destination (5).

## Description

The object of the present patent application is a method for generating at least one notification to a user in a shared vehicle according to Claim 1, which incorporates notable innovations and advantages.

Currently, there are various applications and technologies related to the shared car, and also to the need for effecting notifications to the user as they are approaching their destination location.

An application is known from the prior art, under the title of "Alarm Location Advisor (GPS)" for mobile electronic devices. Said application works with a geolocation system (GPS) wherein the user marks a point on the map (destination) and a radius (relative to the destination) for being notified by means of an alarm when said user is approaching their destination. The intelligence or processing unit of the application is located in a mobile phone or Smartphone, so that it has no connection with the vehicle nor has the interaction of other users with whom the car is shared. Accordingly, the alarm is limited to the options that the mobile phone allows.

The document KR101690602 is also known from the prior art. This relates to a shared car geolocation system which, amongst other functions, creates alarms for users when the car is approaching, if it is delayed in reaching the user, or when it has completed the trip. They are therefore notifications so that a user may know that the reserved vehicle is approaching. The alarm is prior to the user entering the vehicle.

Document US2016/0364823 is also known from the prior art. This relates to a method for on-demand vehicle sharing, which takes into account the proposals of the users for determining the route according to the characteristics that have been prearranged. It does not describe the presentation of personalized alarms.

The preceding patent documents KR101690602 and US2016/0364823 describe centralized systems of trip requests from the users and obtain the optimum routes for the different vehicles according to the destination of each of the users. The alarms focus on notifying users at the moment that the shared car is approaching its position for starting the shared trip, but do not have an alarm for completing the journey.

Thus, it is seen that there is a need to generate at least one notification to a user in a shared vehicle, when they are reaching their destination.

The present invention consists of a method for generating at least one notification to a user in a shared vehicle. This will be an increasingly more frequent need, especially in big cities, when the shared use of the vehicles spreads. Thus, the vehicle will adapt its route according to the people that it carries, their destinations, and if there are new people who wish to share the trip. In said shared vehicles, each person tends to be performing a different task (reading, working, sleeping, watching films, etc.), on occasion not paying attention to the route or to the arrival at their particular destination. This is the problem that the method of the present invention seeks to address, in order to minimize the risk that a user goes past their destination. In addition, it seeks to minimize the time required for a user to perform the manoeuvre of leaving the shared vehicle, thereby helping to optimize traffic.

More specifically, the present invention relates to a method for generating at least one notification to a user in a shared vehicle, wherein the vehicle comprises a processing unit, and wherein the method for generating the at least one notification comprises the steps of:
- receiving a trip request in the processing unit, wherein the trip request is required by a user, and wherein the trip request comprises an origin and a destination,
- calculating a path of the vehicle in the processing unit based on the trip request,
- reserving a space in the vehicle for the user,
- determining the space occupied by the user in the vehicle, and
- generating the at least one notification for the user based on the path of the vehicle and the space occupied by the user in the vehicle.

Shared vehicle is understood to mean the practice that consists of sharing a car with other people both for periodic trips and for one-off journeys, including sharing arrangements such as "car sharing", "ride sharing", etc.

Trip request is understood to mean a request or demand for a change of user location or itinerary between an origin and a destination. This trip or itinerary is requested by each user as they wish.

The path of the vehicle is understood to mean the successive positions through which the vehicle will move. The path or route is calculated by the vehicle's processing unit taking into account different parameters, such as each of the vehicle user's trips, existing traffic, new trip requests, etc. Later the variables taken into account for calculating the path of the vehicle will be described in greater detail.

Space in the vehicle is understood to mean a seat or place for a determined user inside the vehicle. The vehicle will have a determined capacity, i.e. a determined number of spaces. Accordingly, if a user's trip is included in the path of the vehicle, the method of the present invention reserves a space inside the vehicle.

The vehicle's processing unit, centralizes the calculation of the itineraries of the different users of the shared car and the notification is personalized for each user, so that the notification or alarm is generated taking into account the position of the user or space that they occupy in the vehicle.

Thus, an occupant or user of the vehicle reserves a place or space in the vehicle through their mobile electronic device or Smartphone. To do this, the vehicle knows the position of origin and destination of this person. The occupant or user sits in a random position inside the vehicle, which is detected by the vehicle. Once the vehicle approaches the destination of the occupant or user, a notification is issued for the determined user.

Advantageously, the vehicle personalizes a notification for each occupant of the vehicle, once it approaches the destination of each of the users, without disturbing or attracting the attention of the rest of the occupants of the vehicle. Accordingly, the present invention is a service especially designed for the shared car.

At the time that it occurs the alarm or notification, on being centralized and calculated by the vehicle, is regularly updated in the event that, for example, the navigator changes the route for picking up another user, or in the event of traffic problems, or if the battery needs recharging, refuelling, etc.

In summary, some advantages of an embodiment of the present invention consist of:
- greater efficiency and accuracy in calculating the notifications,
- minimizing the time that a vehicle is parked for dropping off passengers, since it personalizes and individualizes the notification,
- improvement in the notification, since it is performed only for the specific person, and
- improvement in the comfort of the rest of the passengers of the vehicle.

Preferably the step of generating the at least one notification to the user is based on a time period before the vehicle arrives at the destination, wherein the time period is previously defined by the user. In this way each user selects the time range in which they receive the notification, according, for example to whether they contemplate sleeping until they arrive at the destination, or performing a lighter activity, like listening to music or reading, which may take them less time to recover for being ready to disembark from the vehicle. This is advantageous with respect to the general knowledge of the prior art of activating an alarm by a public transport passenger for waking up when they arrive at their destination. Said alarm is configured for an approximate time of arrival at the destination, according to the public transport timetable or the expected time of arrival according to the navigator, and not a distance or actual time of arrival at the destination of the vehicle, as is the case of the present invention.

Preferably, the step of generating the at least one notification to the user is based on the distance before the vehicle arrives at the destination, wherein the distance is previously defined by the user. Thus, in the same way as with the time period described above, each user may select the distance range in which they receive the notification, according, for example, to whether they contemplate working until they arrive at the destination, or another lighter activity that may take them less time for being ready to disembark from the vehicle.

Advantageously, the processing unit calculates an instant of generating the at least one notification according to the time period and/or the at least one distance to the destination and/or a number of intermediate stops and/or a traffic forecast and/or a sequence of traffic lights and/or a traffic log, so that the processing unit takes into account the preceding criteria for issuing a notification, according to the circumstances at any given moment. For obtaining the data of the criteria described above, the processing unit is connected to different information channels such as the Internet, GPS navigation, etc. In this way, the accuracy and efficiency of the personalized notification to each user is increased, the notification being adapted according to external factors and parameters to the distance or time request made by the users themselves.

In one embodiment of the invention, a communication between the processing unit and the user is by means of a mobile electronic device, which, advantageously, the users themselves have, the user being accustomed to respond to notifications and/or alerts that emanate from it. Alternatively it may be by means of another electronic device, such as a computer or other devices.

It is required that the vehicle's processing unit has the ability to be in communication and issue notifications, simultaneously with a second user, and with multiple additional users.

It should be mentioned that the step of determining the space occupied by the user in the vehicle comprises at least one exchange of wireless signals between the mobile electronic device and at least one transceiver of the vehicle. Transceiver is understood to mean a device that is capable of operating as a transmitter and receiver, preferably a wireless signal transceiver.

Said exchange of wireless signals between the mobile electronic device and the at least one transceiver of the vehicle may be understood as a step of associating the mobile electronic device with its position within the passenger compartment of a vehicle. Said step of associating each mobile electronic device of each occupant with their position, whether it is a mobile electronic device or a Smartphone, or a Smartwatch, is especially complex in a small environment, such as that of a passenger compartment of a vehicle. For this purpose a wireless signal transceiver is required in the mobile electronic device, and another transceiver in the vehicle. Said transceiver of the vehicle should be in a suitable and known position. Thus, the time is assessed in which a wireless signal travels from the mobile electronic device to the transceiver of the vehicle or, alternatively, the signal intensity is assessed between both components in order to know the distance that separates them, making it possible to know the position of the mobile electronic device inside the vehicle.

Another option is triangulating the mobile electronic device inside the vehicle by means of a plurality of transceivers of the vehicle. A third option would be presence detection via GPS, or alternatively, by manually entering which user occupies each place.

Preferably, the step of determining the space occupied by the user in the vehicle is by means of a camera. Said camera is preferably for facial recognition, which offers the advantageous effect of serving as a mood sensor of each of the occupants or users and adapting the type of notification or alarm to the user's mood.

It is required that the step of generating at least one notification for or to the user is by means of a warning device, wherein the signal is associated with the place occupied by the user in the vehicle.

Preferably, the step of generating the at least one notification to the user comprises a vibration in an element of contact with the user, so that the user is informed by means of the sense of touch of the arrival at the point of destination. Thus, the vibration has to occur in an element of contact of the vehicle with the user, such as the seat. In this way, the notification is performed only to the user in question, minimizing the inconvenience to other users who share part or all of the itinerary in the shared car.

According to another variant of the invention, the step of generating the at least one notification to the user comprises illuminating at least one light, wherein the at least one light is associated with the space occupied by the user in the vehicle, so that it is clear that the notification is intended only for the user occupying said place in the vehicle. Thus, said light is preferably focused towards the user.

The notification to the user is thus preferably performed through a separate alarm. Separate alarm is understood to mean an alarm that only notifies the user in question, either by means of lighting, vibration in the seat, or sound in the event that the user has connected their headphones to the vehicle or to the mobile electronic device.

According to another aspect of the invention, the step of generating the at least one notification for the user comprises repeating the at least one notification in a predefined time interval, so as to ensure attracting the attention of the user, and avoiding the circumstance that they are not made aware. For example, the notification or alarm by means of lighting has a specific light mode when arriving at the destination, in the style of a blinking light of a metro stop. Said alarm will be repeated in a predefined time interval, e.g. every minute, if the user does not stop said alarm in repeat or "snooze" mode. In this way it is additionally ensured that the user receives the message that they are approaching their destination.

According to another aspect of the invention, the method for generating at least one notification comprises an additional step of accepting a second trip request, wherein the second trip request is required by a second user, wherein the second trip request comprises a second origin and a second destination, and wherein accepting the second trip request is based on:
- determining a compatibility between the trip request and the second trip request, and
- determining whether there has been at least one notification generated, so that:
   if determining the compatibility is negative, the second trip request is rejected;
   if determining the compatibility is positive and determining the at least one notification is negative, the second trip request is accepted;
   if determining the compatibility is positive and determining the at least one notification is positive, the second trip request is rejected.

In this way the situation does not occur that the vehicle changes its path if a notification has already been issued to the user of their arrival at the destination and/or its reception has been checked. This avoids the user being in a situation of confusion faced with the contradiction between the notification received and the reality of the vehicle's journey at that moment.

Thus, it is advantageous that the processing unit that manages the notifications is in the vehicle, since it calculates the routes. An example of this would be, for example, if the vehicle is caught up in a traffic jam, or if the user driving the vehicle sharing a trip with a user decides to stop off to pick up a second passenger or user when it is already close to the destination of the first user. According to the prior art in this circumstance the mobile electronic device would have notified the first passenger of having already entered the area near their destination. In the present invention they would not yet have been notified since they know that there is a bit farther to go, and therefore the arrival time at the destination of the first user is delayed.

In a preferred embodiment of the invention, the method for generating at least one notification determines the compatibility between the trip request and the second trip request, by means of the steps of calculating the path of the vehicle in the processing unit based on the at least one second trip request, and determining in the calculated path whether the second origin of the second trip request is prior to the destination of the trip request. In this way, the method comprises a prior step of receiving the second trip request, assessing whether the path of the vehicle is capable of being modified for incorporating the second trip request. If the result of the assessment is negative, i.e. the path is not modified, the aforementioned step of checking whether the user has been notified is not performed.

Advantageously, the method for generating at least one notification comprises an additional step of checking a reception of the at least one generated notification. In this way, the vehicle, through its processing unit, receives and takes into account the information that the user has received the notification, i.e. that they have been informed, and expects that the action or circumstance contained in the notification is going to take place.

On the other hand, the step of generating the at least one notification for the user, comprises introducing an additional notification based on the step of checking the reception of the at least one generated notification. In this way, it has an impact on the first notification, and confirmation is required from the user regarding having seen it. In particular, it may have an impact on the intensity of the first notification, or involve issuing another type of notification differing with respect to the preceding one.

According to another aspect of the invention, the method for generating at least one notification comprises an additional step of accepting a second trip request, wherein the second trip request is required by a second user, wherein the second trip request comprises a second origin and a second destination, and wherein accepting the second trip request is based on determining a compatibility between the trip request and the second trip request, and checking the reception of the at least one generated notification so that: if determining the compatibility is negative, the second trip request is rejected; if determining the compatibility is positive and checking the reception of the at least one notification is negative, the second trip request is accepted; and if determining the compatibility is positive and checking the reception of the at least one notification is positive, the second trip request is rejected. In this way, a notification to the driver is not performed when the destination has already been reached in the time period that has been requested, it not being possible, subsequently, to incorporate new stops that postpone the arrival at the destination. Thus, if the user is notified, the planned paths of the vehicle may not be modified, so as not to alter the information received by the user in the notification.

In addition, if the at least one second trip request is accepted, the method for generating the at least one notification comprises, reserving a second space in the vehicle for the second user, determining the second space occupied by the second user in the vehicle, and generating the at least one notification for the second user based on the at least one path of the vehicle and the second space occupied by the second user in the vehicle. In this way the method for generating at least one notification of the invention envisages the incorporation of new users in the vehicle in a shared car mode. The aforementioned steps are repeated each time a new trip request is entered. Thus, a second user has been spoken of but this may refer to any other additional user, without restriction, with their additional trip request.

The attached drawings depict, by way of a non-restrictive example, a method for generating at least one notification to a user in a shared vehicle, constituted in accordance with the invention. Other features and advantages of said method for generating at least one notification to a user in a shared vehicle, the object of the present invention will become clear from the description of a preferred, but not exclusive, embodiment that is illustrated by way of a non-restrictive example in the accompanying drawings, in which:
Figure 1.- Is a perspective view of the console of a vehicle and the driver's and co-driver's place, in accordance with the present invention.
Figure 2.- Is a schematic view of the components of the method for generating at least one notification to a user in a shared vehicle, in accordance with the present invention.
Figure 3.- Is schematic view of the steps according to an embodiment of the method for generating at least one notification and an additional notification to a user in a shared vehicle, in accordance with the present invention.
Figure 4.- Is a schematic view of a path of a shared vehicle with multiple users, accepting the second trip request, in accordance with the present invention.
Figure 5.- Is a schematic view of a path of a shared vehicle with multiple users, rejecting the second trip request, in accordance with the present invention.

In view of the aforementioned figures and in accordance with the adopted numbering, a preferred embodiment of the invention may be seen therein, comprising the parts and elements that are mentioned and described in detail below.

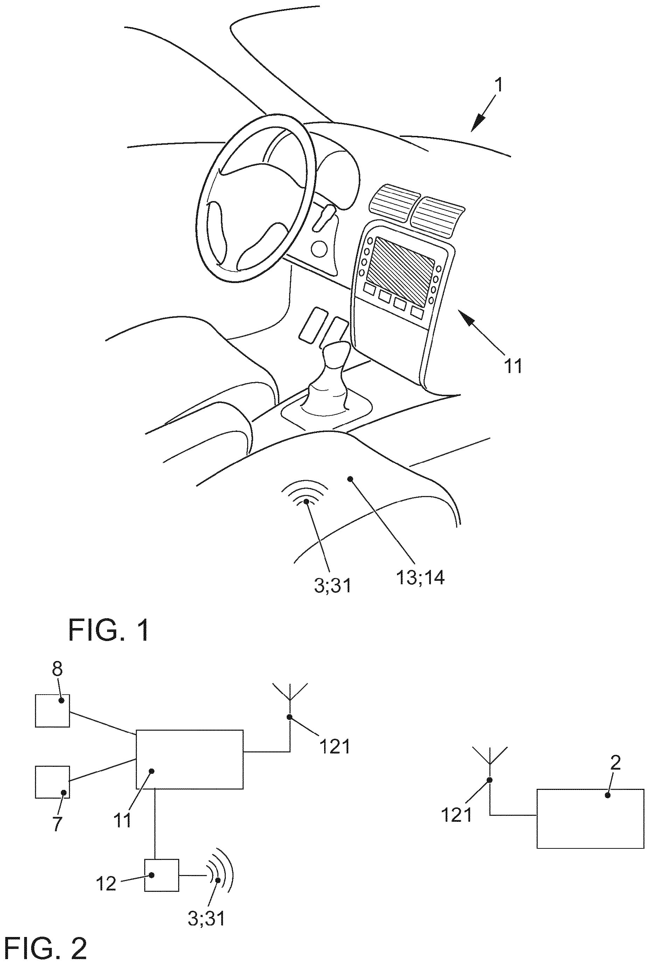

Figure 1 displays the front part of a passenger compartment of a shared vehicle 1, with the processing unit 11, and with the notification means 12. In this case the vehicle has an element of contact 14 that performs the notification 3 or the additional notification 31 to the user by vibration when said user is sitting in their space 13, specifically a seat of the vehicle 1.

According to one non-restrictive embodiment, the element of contact 14 with the user is a seat and/or a safety belt and/or a footrest and/or an armrest and/or a headrest.

Figure 2 displays a diagram with the components on which the method of the present invention is performed, specifically a processing unit 11 comprising communication means 121, preferably wireless, for establishing a connection with the mobile electronic device 2. The processing unit 11 is also connected with notification means 12 that are responsible for performing the notification 3 or additional notification 31. The processing unit 11 also has a transceiver 7 and a camera 8 for determining the position or space occupied by the users inside the vehicle 1.

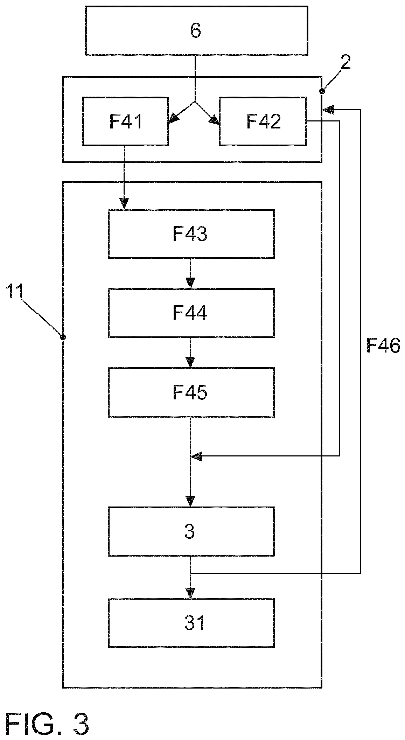

Figure 3 displays a diagram of the steps according to an embodiment of the method for generating at least one notification 3 to a user 6 in a shared vehicle 1, according to which the user 6 by means of a mobile electronic device 2 performs a trip request F41, and determines a time period or distance range F42 for receiving the notification 3. Subsequently, the processing unit 11 first performs a calculation of the path F43 of the vehicle 1, then reserves a space F44 in the vehicle to be occupied by the user 6 and finally determines the space occupied F45 once the user 6 has entered the vehicle. Lastly, the processing unit 11, taking into account the time period or distance F42 introduced by the user 6 by means of the mobile electronic device 2, performs a notification 3 to the user 6. In the event that checking reception of the notification F46 is negative the processing unit performs an additional notification 31 so that the user 6 is informed of the proximity of their destination.

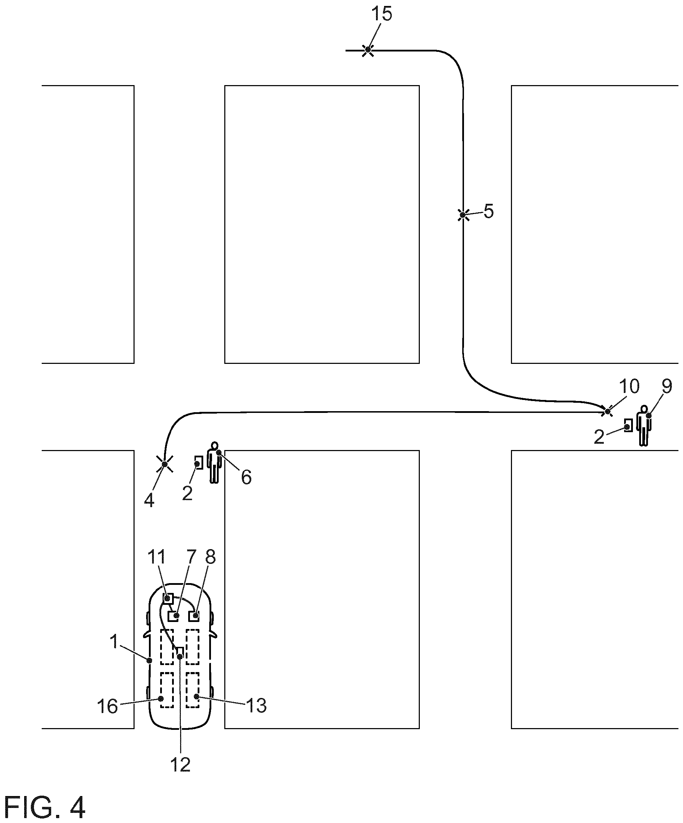

Figure 4 displays a schematic view of a shared trip of a user 6 with a mobile electronic device 2 and a second user 9 with their respective mobile electronic device 2. An aerial view may be seen with a shared-use vehicle 1 about to pick up the user 6 in a position of origin 4 for transporting them to a position of destination 5. On the journey between the origin 4 and destination 5 position of the user 6, the vehicle 1 picks up a second user 9 in a second origin position 10 for transporting them to a second destination 15. The processing unit 11 has a transceiver 7 and a camera 8, being two parallel methods for determining the space inside the vehicle 1 occupied (space 13 or second space 16) by the different users 6, 9. Next, knowing the space occupied by each user 6, 9, the processing unit 11 performs the personalized notifications by means of the notification means 12.

According to a preferred, and not restrictive, embodiment, the vehicle 1 calculates said advance notice time according to various parameters such as:
- distance to the destination,
- number of intermediate stops and users 6, 9 that get on and get off the vehicle 1,
- traffic forecast obtained from navigation data sent by other vehicles 1,
- forecast traffic according to the weather, analysing how the traffic is on a sunny day and on a rainy day, proposing alternatives according to the weather forecast (recommending the user to get off early, take other routes, etc.),
- forecast traffic at school entering and leaving times. Thus, when the user 6, 9 is not headed towards them, the users 6, 9 are recommended make a detour from the direct route to avoid traffic jams that schools cause in their surrounding area at certain times,
- forecast traffic when there are events with large attendances: the processing unit 11 changes the usual route, knowing the dynamics of traffic jam formation in the hours prior to same,
- forecast traffic according to accidents,
- traffic lights sequence,
- logs of how the traffic behaves according to these circumstances.

A non-restrictive example of the method of the present invention would be the following sequence:
- first user 6 or passenger requests the vehicle 1,
- second user 9 or passenger requests the vehicle 1,
- transfer of information between the vehicle 1 and the first mobile electronic device 2, so that the vehicle knows the destination 5 of the first user 6 or passenger,
- detection of the position occupied by first user 6 or passenger within the vehicle 1.

Said detection may be performed either by a sensor in the seat, or by a sensor in the seat belt, or by a camera 8,
- transfer of information between the vehicle 1 and the second mobile electronic device 2, so that the vehicle 1 knows the destination 15 of the second user 9 or passenger,
- detection of the position occupied by the second user 9 or passenger within the vehicle 1,
- vehicle 1 detects that the position of the vehicle 1 is close to the destination 5 of the first user 6 or passenger,
- notification 3 for the first user 6 or passenger. Said notification 3 is performed either by means of a vibration in the seat, or by means of ambient light, or by transmitting a signal to the appropriate mobile electronic device 2 or Smartphone,
- previously the first user 6 or passenger may have personalized the prior notification 3 time, e.g. in the situation of starting to work, and knowing that it may take them a few minutes to collect everything, they program an earlier notification 3. Alternatively, if they decide to watch a film, they know that only a few seconds are needed. The vehicle is capable of transforming the advance notice time required into distance to the final destination 5, for performing the notification 3. In this way:
- vehicle 1 detects that it is close to the destination 15 of the second user 9 or passenger,
- notification 3 for the second user 9 or passenger.

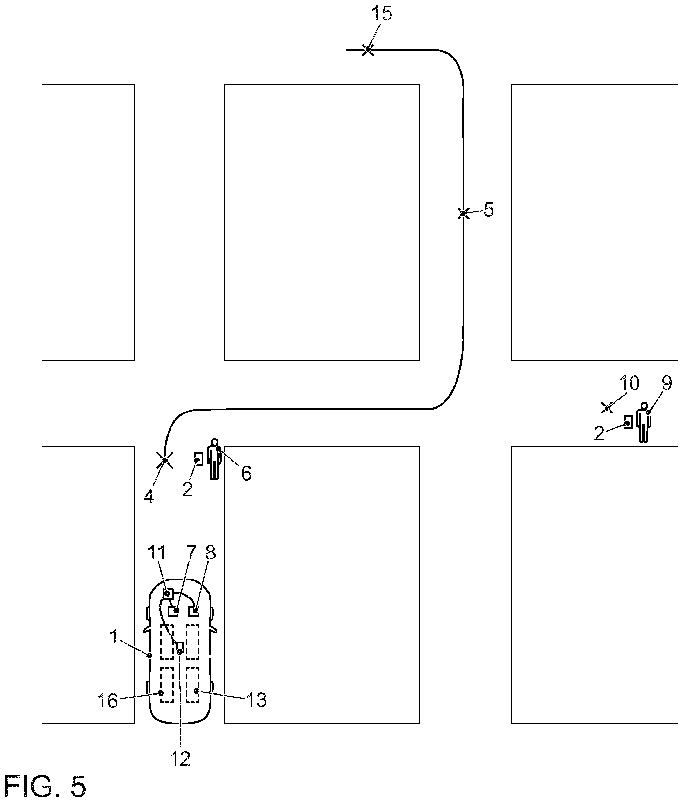

In addition, as seen in Figures 4 and 5, the method for generating at least one notification 3 comprises an additional step of checking a reception of the at least one generated notification 3. Thus, a check may be requested from the user 6, by means of the mobile electronic device 2 that they have received the notification in the form of a notification 3 or alarm, in repeat mode, so that the vehicle 1 is made aware that the user 6 will be prepared to leave the vehicle 1. This point may have an impact at the time of calculating the next routes, on seeking a temporary parking area for the user 6 to leave the vehicle 1. If, after a predefined time, arriving at the destination 5 the user 6 has not stopped, or responded to, the notification 3 or alarm, a second additional notification 31 or alarm may be introduced, either acoustic or another type, in order to ensure that the user 6 has been notified.

By way of example and as shown in Figure 4, the user 6 indicates a predefined value of the advance notice time period with which they wish to be notified (e.g. 5 minutes). The generation of the at least one notification 3 affects the path calculated by the vehicle 1. Thus, when the processing unit 11 of the vehicle 1 detects that there remain, in said example, 5 minutes to reach the destination 5 of the user 6, it issues the personalized notification alarm 3 for the space 13 occupied by the user 6. The user 6 presses the confirmation button with which they notify the vehicle 1 that they have acknowledged the notification 3, and they will begin preparations to leave the vehicle 1. Accordingly, the user 6 begins their preparations to leave the vehicle 1, knowing that the vehicle 1 is at a time for reaching the destination 5 less than the time period previously defined by the user 6.

Thus, in the example referred to earlier, when 6 minutes remain for reaching the destination 5, a new user, indicated as the second user 9 requests this vehicle 1. The processing unit 11 determines that the trip request and the second trip request are compatible. Similarly, the method of the present invention checks that the at least one notification 3 generated to the user 6 has been received. Since the request for the second trip of the second user 9 occurs prior to the generation of the at least one notification 3 to the user 6, the second trip is accepted and the path of the vehicle 1 is adapted in order to include the second origin 10 in the path.

Similarly, if the user 6 has not notified that they have correctly received the at least one generated notification 3, the path of the vehicle 1 would be also adapted in order to include the second trip of the second user 9 in the path. The fact that the first user 6 has not activated the confirmation is understood to mean that they were not yet aware of the notification 3 or alarm, so that they have not started their preparations. Hence, the vehicle 1 could accept new intermediate stops. Then, the notification 3 or alarm to the first user 6 will be halted and it will be recalculated for adapting it to the new route.

However, and as seen in Figure 5, the situation may arise in which, when only 4 minutes remain for reaching the destination 5, a new user, indicated as the second user 9 requests this vehicle 1. The processing unit 11 determines that the trip request and the second trip request are compatible, so that the path of the vehicle 1 could be adapted in order to include the second origin 10 in the path. However, since the first user 6 has already been notified of the fact that their destination 5 is less than 5 minutes away, the vehicle 1 no longer accepts new stops or new users 9, since, otherwise, it would not meet the deadlines indicated to the first users 6.

The details, forms, dimensions and other accessory elements, as well as the components employed in implementing the method for generating at least one notification to a user in a shared vehicle 1 may be conveniently replaced by others that are technically equivalent, and do not depart from the essence of the invention or the scope defined by the claims that are included after the following list.

### List of numerical references:

- 1: vehicle
- 11: processing unit
- 121: wireless communication means
- 12: notification means
- 13: space
- 14: element of contact
- 2: mobile electronic device
- 3: notification
- 31: additional notification
- 4: origin
- 5: destination
- 6: user
- 7: transceiver
- 8: camera
- 9: second user
- 10: second origin
- 15: second destination
- 16: second space

### Text in the figures:

- F41: Trip request
- F42: Time period or distance
- F43: Calculating path of the vehicle
- F44: Reserving space
- F45: Determining occupied space
- F46: Checking reception of the notification

## Claims

1. Method for generating at least one notification (3) to a user (6) in a shared vehicle (1), wherein the vehicle (1) comprises a processing unit (11), and wherein the method for generating the at least one notification (3) comprises the steps of:
- receiving a trip request in the processing unit (11), wherein the trip request is required by a user (6), and wherein the trip request comprises an origin (4) and a destination (5),
- calculating a path of the vehicle (1) in the processing unit (11) based on the trip request,
- reserving a space (13) in the vehicle (1) for the user (6), - determining the space (13) occupied by the user (6) in the vehicle (1), and
- generating the at least one notification (3) for the user (6) based on the path of the vehicle (1) and the space (13) occupied by the user (6) in the vehicle (1).

2. Method for generating at least one notification (3) according to Claim 1, **characterized in that** the step of generating the at least one notification (3) to the user (6) is based on a time period before the vehicle (1) arrives at the destination (5), wherein the time period is previously defined by the user (6).

3. Method for generating at least one notification according to Claim 1, **characterized in that** the step of generating the at least one notification (3) to the user (6) is based on the distance before the vehicle (1) arrives at the destination, wherein the distance is previously defined by the user (6).

4. Method for generating at least one notification (3) according to any of the preceding claims, **characterized in that** the processing unit (11) calculates an instant of generating the at least one notification (3) according to the time period and/or at least one distance to the destination and/or a number of intermediate stops and/or a traffic forecast and/or a sequence of traffic lights and/or a traffic log.

5. Method for generating at least one notification (3) according to any of the preceding claims, **characterized in that** a communication between the processing unit (11) and the user (6) is by means of a mobile electronic device (2).

6. Method for generating at least one notification according to Claim 5, **characterized in that** the step of determining the space (13) occupied by the user (6) in the vehicle (1) comprises at least one exchange of wireless signals between the mobile electronic device (2) and at least one transceiver (7) of the vehicle.

7. Method for generating at least one notification (3) according to any of Claims 1 to 5, **characterized in that** the step of determining the space occupied (13) by the user (6) in the vehicle (1) is by means of a camera (8).

8. Method for generating at least one notification (3) according to any of the preceding claims, **characterized in that** the step of generating the at least one notification (3) to the user (6) comprises a vibration in an element of contact (14) with the user (6).

9. Method for generating at least one notification (3) according to any of the preceding claims, **characterized in that** the step of generating the at least one notification (3) to the user (6) comprises illuminating at least one light, wherein the at least one light is associated with the space (13) occupied by the user (6) in the vehicle (1).

10. Method for generating at least one notification (3) according to any of the preceding claims, **characterized in that** the step of generating the at least one notification (3) for the user (6) comprises repeating the at least one notification (3) in a predefined time interval.

11. Method for generating at least one notification (3) according to any of the preceding claims, **characterized in that** it comprises an additional step of accepting a second trip request, wherein the second trip request is required by a second user (9), wherein the second trip request comprises a second origin (10) and a second destination (11), and wherein accepting the second trip request is based on:
- determining a compatibility between the trip request and the second trip request, and
- determining whether there has been at least one notification (3) generated, so that:
if determining the compatibility is negative, the second trip request is rejected, and
if determining the compatibility is positive and determining the at least one notification (3) is negative, the second trip request is accepted, and
if determining the compatibility is positive and determining the at least one notification (3) is positive, the second trip request is rejected.

12. Method for generating at least one notification according to Claim 11, **characterized in that** determining a compatibility between the trip request and the second trip request comprises the steps of:
- calculating the path of the vehicle in the processing unit (11) based on the at least one second trip request, and
- determining in the calculated path whether the second origin (10) of the second trip request is prior to the destination (5) of the trip request.

13. Method for generating at least one notification (3) according to any of the preceding claims, **characterized in that** it comprises an additional step of checking a reception of the at least one generated notification (3).

14. Method for generating at least one notification (3) according to Claim 13, **characterized in that** the step of generating the at least one notification (3) for the user (6) comprises introducing an additional notification (31) based on the step of checking the reception of the at least one generated notification (3).

15. Method for generating at least one notification (3) according to either of Claims 13 and 14, **characterized in that** it comprises an additional step of accepting a second trip request, wherein the second trip request is required by a second user (9), wherein the second trip request comprises a second origin (10) and a second destination (11), and wherein accepting the second trip request is based on:
- determining a compatibility between the trip request and the second trip request, and
- checking the reception of the at least one generated notification (3), so that:
if determining the compatibility is negative, the second trip request is rejected,
if determining the compatibility is positive and checking the reception of the at least one notification (3) is negative, the second trip request is accepted, and
if determining the compatibility is positive and checking the reception of the at least one notification (3) is positive, the second trip request is rejected.

16. Method for generating at least one notification (3) according to any of Claims 11 to 15, **characterized in that** it if the at least one second trip request is accepted, the method for generating the at least one notification (3) comprises:
- reserving a second space (12) in the vehicle (1) for the second user (9),
- determining the second space (12) occupied by the second user (9) in the vehicle (1), and
- generating the at least one notification (3) for the second user (9) based on the at least one path of the vehicle (1) and the second space (12) occupied by the second user (9) in the vehicle (1).
